# EUROPÄISCHE PATENTSCHRIFT

(11) **EP 2 685 121 B1**
(45) Veröffentlichungstag und Bekanntmachung des Hinweises auf die Patenterteilung: **12.08.2015**
(21) Anmeldenummer: 13172597.0
(22) Anmeldetag: 19.06.2013
(51) Int. Cl.: F16D 13/58

(54) **Drahtring zur Lagerung einer Tellerfeder und Tellerfedersystem für eine Reibkupplung**
Wire ring for supporting a plate spring and plate spring system for a friction clutch
Anneau de fil pour le logement d'une rondelle conique et système de rondelle conique pour un embrayage à friction

(30) Priorität: 03.07.2012 DE 102012211482
(43) Veröffentlichungstag der Anmeldung: 15.01.2014
(73) Patentinhaber: Schaeffler Technologies AG & Co. KG, 91074 Herzogenaurach (DE)
(72) Erfinder: Finkenzeller, Marc, 77723 Gengenbach (DE)

(56) Entgegenhaltungen:
- DE-A1- 19 716 399
- FR-A1- 2 689 190
- GB-A- 2 222 439
- GB-A- 2 299 631
- US-A1- 2005 121 282

## Beschreibung

Die Erfindung betrifft einen Drahtring zur Lagerung einer Tellerfeder einer Reibkupplung und ein Tellerfedersystem für eine Reibkupplung. Eine Reibkupplung weist zumindest eine Anpressplatte und eine korrespondierende Reibscheibe auf, welche durch aneinander Anpressen eine Reibkraft übertragen, so dass ein Drehmoment von der Anpressplatte auf die Reibscheibe übertragbar ist. Zum Anpressen der Anpressplatte gegen die Reibscheibe wird häufig eine Tellerfeder verwendet. Ebenso kann die Tellerfeder zum Lösen der Anpressplatte von der Reibscheibe verwendet werden. Die Tellerfeder wirkt, in der Regel mit ihrer Außenkante, gegen die Anpressplatte und ist an einer Kipplinie mit einem bestimmten Radius kippbar gelagert, so dass die Tellerfeder als Kipphebel betätigbar ist. Die entsprechende Betätigung wird durch eine Rückeinrichtung, die die Anpressplatte einrückt oder ausrückt, vorgenommen. Für viele Anwendungen wird die Kipplinie mittels eines Drahtrings gebildet.

Über die Lage des Drahtrings beziehungsweise den Radius der Kipplinie kann die Schaltcharakteristik der Reibkupplung eingestellt werden. Weil der Drahtring nur einen spezifischen Radius aufweist, muss für jede Einstellung beziehungsweise Auslegung der Reibkupplung ein individueller Drahtring eingesetzt werden. Dementsprechend müssen zumindest auch alle direkten Anbauteile konstruiert werden, insbesondere das Deckelgehäuse, in welchem der Drahtring häufig gelagert ist. Auch muss häufig die Tellerfeder angepasst werden.

Hiervon ausgehend liegt der vorliegenden Erfindung die Aufgabe zugrunde, die aus dem Stand der Technik (siehe insbesondere die Patentveröffentlichungen GB2222439, GB2299631, DE19716399 und FR2689190) bekannten Nachteile zumindest teilweise zu überwinden. Die Aufgabe wird durch die Merkmale der unabhängigen Patentansprüche gelöst. Vorteilhafte Weiterbildungen sind Gegenstand der abhängigen Patentansprüche.

Die Erfindung betrifft einen Drahtring zur Lagerung einer Tellerfeder einer Reibkupplung, der einen mehrkantigen Querschnitt aufweist.

Viele Konfigurationen einer Reibkupplung weisen einen Drahtring auf, welcher die Kipplinie für eine Tellerfeder bildet. Die Tellerfeder drückt gegen die Anpressplatte der Reibkupplung und presst somit die Anpressplatte gegen die korrespondierende Reibscheibe oder rückt umgekehrt die Anpressplatte von der Reibscheibe ab. Um die Tellerfeder entgegen ihrer Vorspannung zu bewegen beziehungsweise um ein Gegenlager für die Kraft der Tellerfeder zu bilden, ist ein Drahtring vorgesehen.

Der hier vorgeschlagene Drahtring weist einen mehrkantigen Querschnitt auf, der eine ungerade Anzahl an Kanten aufweist, und eine Seite parallel zur Achse des Drahtrings ausgerichtet ist. Durch die ungerade Anzahl der Kanten kann der Drahtring in unterschiedlichen Wickelrichtungen unterschiedlicher Lagerabstände erzeugen. Die Kante des Drahtrings, welche in Richtung der Zentrumsachse des Drahtrings weist, sowohl die jeweils unterste als auch die jeweils oberste, weist einen unterschiedlichen Radius zur Zentralachse des Drahtrings auf. Somit kann über die Wickelrichtung des Drahtrings ein unterschiedlicher Radius der Lagerung der Tellerfeder eingestellt werden. Damit ist es möglich, die Tellerfeder und das Gegenlagerelement unverändert zu belassen, und dennoch einen im Querschnitt betrachtet variablen Abstand von der Achse der Tellerfeder beziehungsweise des Drahtrings zum Auflagepunkt oder in der Gesamtanordnung betrachtet einen variablen Radius der Kipplinie einzustellen. Insbesondere kann ein und derselbe Drahtring für unterschiedliche Radien der Lagerung eingesetzt werden. Hierdurch wird die Anpassung der Schaltcharakteristik der Tellerfeder ohne konstruktive Änderungen möglich.

In einer weiteren vorteilhaften Ausführungsform des Drahtrings ist der mehrkantige Querschnitt dreieckig wobei insbesondere die Ecken abgerundet sind.

Bei einer dreieckigen Ausführung des Querschnitts ist eine maximale Veränderung des Radius bei einer gegebenen Drahtdicke und Drahtringdurchmesser möglich. Durch unterschiedliche Wickelrichtungen kann jeweils eine Seite des dreieckigen Querschnitts parallel zur Achse des Drahtrings ausgerichtet werden. Insbesondere kann dabei die parallele Seite nach außen gerichtet sein oder nach innen gerichtet. Damit wird der Radius der Lagerung von (in etwa) der Außenkante des Drahtrings (in etwa) zur Innenkante des Drahtrings verlagert. Insbesondere können dabei die Ecken des dreieckigen Querschnitts abgerundet sein. Zum Beispiel können die Ecken einen Radius von 0,5 mm [Millimeter] bis 1 mm bei einer Drahtdicke von 3 mm aufweisen, so dass eine Veränderung des Radius der Lagerung um 1 mm bis 2 mm möglich ist. Die Drahtdicke kann an die jeweilig notwendige Funktion in ihrer Dicke angepasst werden und liegen in etwa zwischen 1 mm und 6 mm. Der Eckenradius kann dabei zwischen 0,1 mm und 2 mm gewählt werden.

In einem weiteren Aspekt der Erfindung wird ein Tellerfedersystem für eine Reibkupplung vorgeschlagen, welche zumindest die folgenden Komponenten aufweist:
- eine Tellerfeder, die eingerichtet ist eine Kraft auf eine Anpressplatte einer Reibkupplung auszuüben;
- zumindest ein Gegenlagerelement zur Aufnahme der Lagerkraft der Tellerfeder; und
- zumindest ein Drahtring, der zwischen dem zugehörigen Gegenlagerelement und der Tellerfeder eine Kipplinie für die Tellerfeder bildet;
wobei der zumindest eine Drahtring zwei Wickelrichtungen aufweist, und der Radius der Kipplinie mittels der Wickelrichtung einstellbar ist.

Das Tellerfedersystem ist dazu eingerichtet, eine Anpressplatte einer Reibkupplung gegen eine entsprechende Reibscheibe zu drücken oder von dieser zu beabstanden. Dazu drückt die Tellerfeder gegen die Anpressplatte und ist dabei über ein Gegenlager beziehungsweise Kipplager für das Moment, welches zum Beispiel der Kupplungsdeckel einer Reibkupplung ist. Zwischen dem Gegenlagerelement und der Tellerfeder ist ein Drahtring vorgesehen, der den Lagerpunkt beziehungsweise die Kipplinie der Tellerfeder an dem Gegenlagerelement definiert. Hierbei weist der Drahtring zwei Wickelrichtungen auf, die im Vergleich zueinander eine Verlagerung des Radius der Kipplinie bewirken. Wird der Drahtring in einer ersten Wickelrichtung aufgewickelt, so ist der Radius zum Beispiel zum Zentrum des Drahtrings verlagert und wird der Drahtring in einer zweiten Wickelrichtung gewickelt, so ist der Radius entsprechend nach außen hin verlagert. Somit kann mit ein und demselben Drahtring ein unterschiedlicher Radius der Kipplinie eingestellt werden. Insbesondere müssen die Tellerfeder und/oder das zumindest eine Gegenlagerelement nicht verändert werden. In manchen Tellerfedersystemen kann auch beidseitig der Tellerfeder ein Drahtring vorgesehen sein und entsprechend ein weiteres Gegenlagerelement. Hierbei kann der zweite Drahtring entsprechend angepasst an den ersten Drahtring gewickelt werden, so dass der Radius des ersten Drahtrings mit dem Radius des zweiten Drahtrings übereinstimmt.

In der Ausführungsform des Tellerfedersystems ist der zumindest eine Drahtring ein Drahtring gemäß der obigen Beschreibung.

Mit dem Drahtring gemäß der obigen Beschreibung ist eine Verlagerung des Radius der Kipplinie mittels des mehrkantigen Querschnitts des Drahtrings und der entsprechenden Wickelrichtung einstellbar.

In einer weiteren vorteilhaften Ausführungsform des Tellerfedersystems weist das jeweilige Gegenlagerelement eine profilierte Nut für eine Drahtfeder auf, in die die Drahtfeder nur in einer Wickelrichtung einsetzbar ist.

Zur zusätzlichen Fixierung des Drahtrings wird in dem jeweiligen Gegenlagerelement eine Nut vorgesehen. Die Nut kann so profiliert sein, dass der Drahtring nur in einer Wickelrichtung eingesetzt werden kann. Dadurch wird mittels der profilierten Nut der Radius der Kipplinie eindeutig festgelegt. Hierbei kann gemäß dem Poka-Yoke-Prinzip (Vermeidung von Fehlern, insbesondere in der Endmontage) der Drahtring nicht falsch eingesetzt werden.

In einem weiteren Aspekt der Erfindung wird eine Reibkupplung zum lösbaren Verbinden einer Abtriebswelle mit einem Antriebsstrang vorgeschlagen, welcher zumindest die folgenden Komponenten aufweist:
- ein Reibpaket mit zumindest einer Anpressplatte und zumindest einer korrespondierenden Reibscheibe, über die im angepressten Zustand ein Drehmoment übertragbar ist; und
- eine Rückeinrichtung, die eingerichtet ist, die Anpressplatte gegen die Reibscheibe zu pressen oder von der Reibscheibe zu lösen;
- ein Tellerfedersystem gemäß der obigen Beschreibung, wobei die Tellerfeder von der Rückeinrichtung betätigbar ist und gegen die Anpressplatte wirkt.

Die Abtriebswelle ist beispielsweise eine Kurbelwelle einer Verbrennungskraftmaschine oder eine Abtriebswelle eines Elektromotors. Der Antriebsstrang ist zum Beispiel ein Antriebsstrang eines Kraftfahrzeugs, mit dem Vortrieb erzeugt wird. Die Reibkupplung ist zwischen die Abtriebswelle und den Antriebsstrang geschaltet und kann mittels eines Reibpakets eine Drehmomentübertragung zwischen der Abtriebswelle und dem Antriebsstrang herstellen und lösen. Die Verbindung zwischen der Abtriebswelle und dem Antriebsstrang findet dabei mittels der zumindest einen Anpressplatte und der zumindest einen korrespondierenden Reibscheibe statt, die mit einer Anpresskraft aufeinander gedrückt werden, so dass eine Reibkraft zwischen diesen beiden Komponenten des Reibpakets entsteht. In diesem angepressten Zustand ist dann ein Drehmoment zum Beispiel von der Abtriebswelle auf den Antriebsstrang übertragbar.

Das Einrücken des Reibpakets wird dabei durch eine Rückeinrichtung geschaltet, die die Anpressplatte gegen die Reibscheibe presst oder von der Reibscheibe löst. In der jeweils anderen Richtung wird die Anpressplatte von der Tellerfeder des Tellerfedersystems bewegt. Die Tellerfeder wird durch die Rückeinrichtung von ihrer Krafteinwirkung gelöst und dabei über den Drahtring gekippt. Durch die Lage des Drahtrings kann nach dem Hebelgesetz die jeweilige Kraftcharakteristik des Tellerfedersystems eingestellt werden. Für verschiedene Anwendungen einer baugleichen Reibkupplung kann ein Drahtring gemäß der obigen Beschreibung eingesetzt werden, ohne dass größere Umbaumaßnahmen an dem Tellerfedersystem notwendig sind. Insbesondere kann die Tellerfeder und/oder das Kupplungsgehäuse unverändert bleiben.

In einem Aspekt der Erfindung wird ein Kraftfahrzeug aufweisend eine Antriebseinheit mit einer Abtriebswelle, einem Antriebsstrang und einer Reibkupplung gemäß der obigen Beschreibung vorgeschlagen.

Mit der Reibkupplung gemäß der obigen Beschreibung kann die Charakteristik der Reibkupplung auf die jeweilige Antriebseinheit des Kraftfahrzeugs eingestellt werden. Insbesondere müssen keine Umbaumaßnahmen an den übrigen Komponenten der Reibkupplung vorgenommen werden.

Die in den Patentansprüchen einzeln aufgeführten Merkmale sind in beliebiger, technologisch sinnvoller Weise miteinander kombinierbar und können durch erläuternde Sachverhalte aus der Beschreibung und Details aus den Figuren ergänzt werden, wobei weitere Ausführungsvarianten der Erfindung aufgezeigt werden.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht beschränkt ist. Insbesondere ist darauf hinzuweisen, dass die Figuren und insbesondere die dargestellten Größenverhältnisse nur schematisch sind. Es zeigen:
- Fig. 1:: einen Drahtring in erster Wickelrichtung,
- Fig. 2:: einen Drahtring in zweiter Wickelrichtung,
- Fig. 3:: einen Drahtring mit Eckenradius 1 mm,
- Fig. 4:: einen Drahtring mit Eckenradius 0,75 mm,
- Fig. 5:: einen Drahtring mit Eckenradius 0,5 mm,
- Fig. 6:: ein Tellerfedersystem mit Drahtring in erster Wickelrichtung,
- Fig. 7:: ein Tellerfedersystem mit Drahtring in zweiter Wickelrichtung,
- Fig. 8:: eine Reibkupplung mit Drahtring in erster Wickelrichtung, und
- Fig. 9:: ein Kraftfahrzeug mit Reibkupplung.

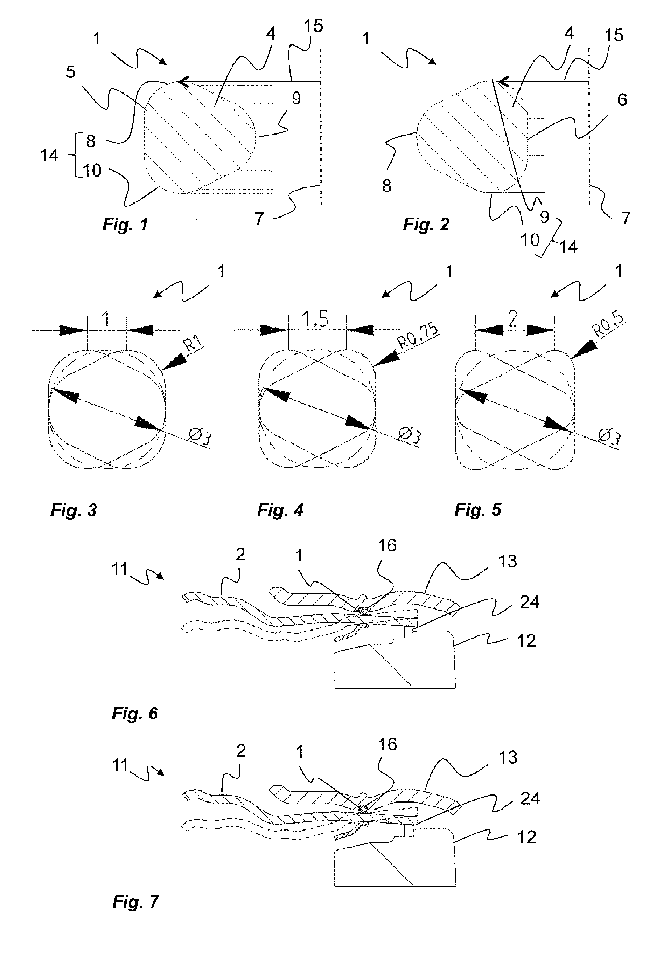

In Fig. 1 ist ein Drahtring 1 in erster Wickelrichtung gezeigt, bei dem eine erste Seite 5 nach außen gerichtet ist. Der Querschnitt 4 des Drahtrings 1 weist eine erste Ecke 8, eine zweite Ecke 9 und eine dritte Ecke 10 auf, wobei die erste Ecke 8 und die dritte Ecke 10 die Kipplinie 14 bilden. Die Kipplinie 14 weist einen Radius 15 zur Achse 7 des Drahtrings 1 auf.

In Fig. 2 ist eine ähnliche Anordnung wie in Fig. 1 gezeigt, wobei hierbei der Drahtring 1 in einer zweiten Wickelrichtung gewickelt ist und somit eine zweite Seite 6 nach innen weist. In diesem Beispiel bilden die zweite Ecke 9 und die dritte Ecke 10 die Kipplinie 14, welche einen deutlich kleineren Radius 15 zur Achse 7 bilden als in Fig. 1.

In Fig. 3 sind ein Drahtring 1, wie er in den Fig. 1 und 2 gezeigt ist, in zwei unterschiedlichen Wickelrichtungen zum Vergleich übereinander gelegt. Gestrichelt angedeutet ist ein Drahtring mit Kreisquerschnitt und 3 mm Durchmesser. Hierbei weisen die Ecken des Drahtrings 1 einen Eckenradius von 1 mm auf, so dass eine Einstellung des Radius zur Achse 7 um 1 mm pro Wickelrichtung erreicht werden kann. Der Übersicht halber sind die Elemente des Drahtrings 1 nicht weiter bezeichnet. Dazu wird auf die Fig. 1 und 2 verwiesen, deren Querschnitt hier überlagert gezeigt wird.

Entsprechend sind in den Fig. 4 und 5 überlagerte Querschnitte wie in Fig. 3 gezeigt, wobei sich hier die Abrundung der Ecken unterscheidet. In Fig. 4 beträgt der Eckenradius 0,75 mm, wodurch eine Veränderung des Radius der Kipplinie um 1,5 mm ermöglicht wird. In Fig. 5 beträgt der Eckenradius 0,5 mm, so dass eine Veränderung des Radius um 2 mm möglich ist.

In Fig. 6 ist ein Tellerfedersystem 11 gezeigt mit einer Tellerfeder 2, welche über einen Drahtring 1 gegenüber einem Gegenlagerelement 13 gelagert ist und welche gegen eine Nocke 24 einer Anpressplatte 12 wirkt. Dabei ist der Drahtring 1 in einer profilierten Nut 16 in dem Gegenlagerelement 13 gehalten.

In Fig. 7 ist eine ähnliche Anordnung des Tellerfedersystems 11 wie in Fig. 6 gezeigt, wobei hier die profilierte Nut 16 auf eine andere Wickelrichtung des Drahtrings 1 eingerichtet ist.

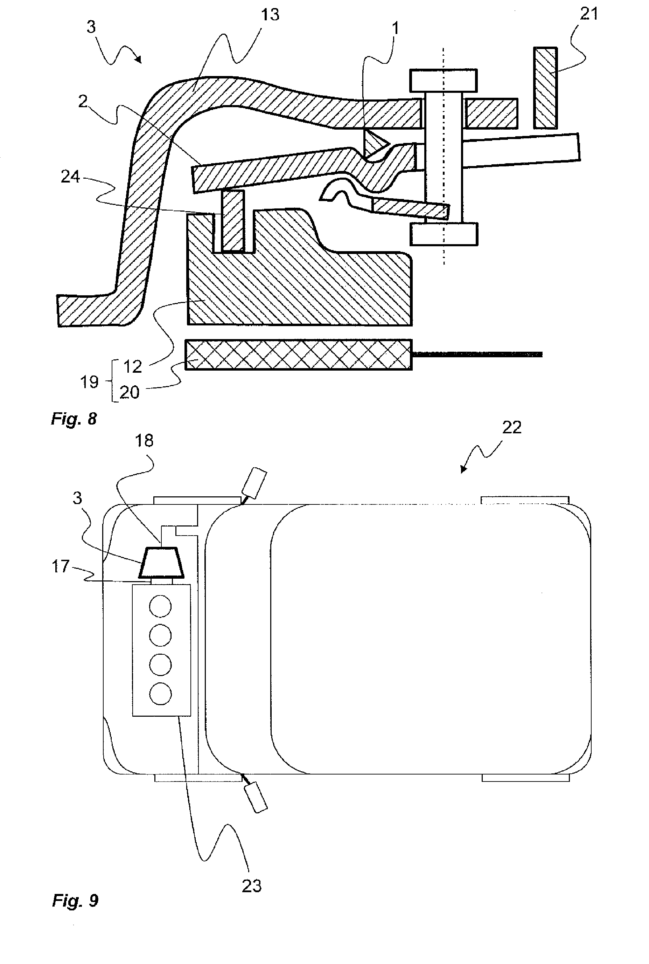

In Fig. 8 ist eine Reibkupplung 3 gezeigt, bei der eine Tellerfeder 2 gegen eine Nocke 24 einer Anpressplatte 12 wirkt, die über die Betätigungseinrichtung 21 von der Reibscheibe 20 gelöst werden kann. Die Anpressplatte 12 und die Reibscheibe 20 bilden das Reibpaket 19, mit welchem ein Drehmoment übertragbar ist. Die Tellerfeder 2 wird über den Drahtring 1, welcher in erster Wickelrichtung eingesetzt ist, gegenüber dem Gegenlagerelement 13 gelagert.

In Fig. 9 ist ein Kraftfahrzeug 22 gezeigt mit einer Antriebseinheit 23, deren Abtriebswelle 17 über eine Reibkupplung 3 mit einem Antriebsstrang 18, welcher rein schematisch dargestellt ist, verbunden ist.

Durch den hier vorgeschlagenen Drahtring ist es möglich, unterschiedliche Radien der Kipplinie einzustellen, ohne einen unterschiedlichen Drahtring zu verwenden. Insbesondere können die Baukomponenten der Reibkupplung trotz verändertem Radius der Kipplinie unverändert bleiben.

### Bezugszeichenliste

- 1: Drahtring
- 2: Tellerfeder
- 3: Reibkupplung
- 4: mehrkantiger Querschnitt
- 5: erste Seite
- 6: zweite Seite
- 7: Achse
- 8: erste Ecke
- 9: zweite Ecke
- 10: dritte Ecke
- 11: Tellerfedersystem
- 12: Anpressplatte
- 13: Gegenlagerelement
- 14: Kipplinie
- 15: Radius
- 16: profilierte Nut
- 17: Abtriebswelle
- 18: Antriebsstrang
- 19: Reibpaket
- 20: Reibscheibe
- 21: Rückeinrichtung
- 22: Kraftfahrzeug
- 23: Antriebseinheit
- 24: Nocken

## Patentansprüche

1. Tellerfedersystem (11) für eine Reibkupplung (3), aufweisend zumindest die folgenden Komponenten:
- eine Tellerfeder (2), die eingerichtet ist eine Kraft auf eine Anpressplatte (12) einer Reibkupplung (3) auszuüben;
- zumindest ein Gegenlagerelement (13) zur Aufnahme der Lagerkraft der Tellerfeder (2); und
- zumindest einen Drahtring (1), der einen mehrkantigen Querschnitt (4) mit einer ungeraden Anzahl von Kanten aufweist, und der zwischen dem zugehörigen Gegenlagerelement (13) und der Tellerfeder (2) eine Kipplinie (14) für die Tellerfeder (2) bildet;
wobei der Drahtring (1) zwei Wickelrichtungen aufweist, und **dadurch gekennzeichnet, dass** Z der Radius (15) der Kipplinie (14) mittels der Wickelrichtung einstellbar ist, wobei eine Kante des Drahtrings (1) parallel zur Zentrumsachse (7) des Drahtrings (1) ausgerichtet ist.

2. Tellerfedersystem (11) nach Anspruch 1, wobei die Ecken (8,9,10) des Drahtrings (1) abgerundet sind.

3. Tellerfedersystem (11) nach Anspruch 1 oder 2, wobei das jeweilige Gegenlagerelement (13) eine profilierte Nut (16) für einen Drahtring (1) aufweist, in die der Drahtring (1) nur in einer Wickelrichtung einsetzbar ist.

4. Reibkupplung (3) zum lösbaren Verbinden einer Abtriebswelle (17) mit einem Antriebsstrang (18), aufweisend zumindest die folgenden Komponenten:
- ein Reibpaket (19) mit zumindest einer Anpressplatte (12) und zumindest einer korrespondierenden Reibscheibe (20), über die im angepressten Zustand ein Drehmoment übertragbar ist;
- eine Rückeinrichtung (21), die eingerichtet ist, die Anpressplatte (12) gegen die Reibscheibe (20) zu pressen oder von der Reibscheibe (20) zu lösen; und
- ein Tellerfedersystem (11) nach einem der Ansprüche 1 bis 3, wobei die Tellerfeder (11) von der Rückeinrichtung (21) betätigbar ist und gegen die Anpressplatte (12) wirkt.

5. Kraftfahrzeug (22) aufweisend eine Antriebseinheit (23) mit einer Abtriebswelle (17), einen Antriebsstrang (18) und eine Reibkupplung (3) nach Anspruch 4.

## Claims

1. Disc spring system (11) for a friction clutch (3), having at least the following components:
- a disc spring (2) which is set up to exert a force on a pressure plate (12) of a friction clutch (3);
- at least one counterbearing element (13) for absorbing the bearing force of the disc spring (2); and
- at least one wire ring (1) which has a polygonal cross section (4) with an odd number of edges, and which forms a tilting line (14) for the disc spring (2) between the associated counterbearing element (13) and the disc spring (2);
the wire ring (1) having two winding directions, and **characterized in that** the radius (15) of the tilting line (14) can be set by means of the winding direction, one edge of the wire ring (1) being oriented parallel to the centre axis (7) of the wire ring (1).

2. Disc spring system (11) according to Claim 1, the corners (8, 9, 10) of the wire ring (1) being rounded.

3. Disc spring system (11) according to Claim 1 or 2, the respective counterbearing element (13) having a profiled groove (16) for a wire ring (1), into which groove (16) the wire ring (1) can be inserted only in one winding direction.

4. Friction clutch (3) for releasably connecting an output shaft (17) to a drive train (18), having at least the following components:
- a frictional assembly (19) with at least one pressure plate (12) and at least one corresponding friction disc (20), via which a torque can be transmitted in the pressed-on state;
- an engaging device (21) which is set up to press the pressure plate (12) against the friction disc (20) or to release it from the friction disc (20); and
- a disc spring system (11) according to one of Claims 1 to 3, it being possible for the disc spring (2) to be actuated by the engaging device (21), and the said disc spring (2) acting counter to the pressure plate (12).

5. Motor vehicle (22) having a drive unit (23) with an output shaft (17), a drive train (18) and a friction clutch (3) according to Claim 4.

## Revendications

1. Système de ressort Belleville (11) pour un embrayage à friction (3), présentant au moins les composants suivants :
- un ressort Belleville (2) qui est prévu pour exercer une force sur une plaque de pressage (12) d'un embrayage à friction (3) ;
- au moins un élément de palier conjugué (13) pour recevoir la force de palier du ressort Belleville (2) ; et
- au moins un anneau de fil (1) qui présente une section transversale polygonale (4) avec un nombre impair d'arêtes, et qui forme, entre l'élément de palier conjugué associé (13) et le ressort Belleville (2), une ligne de basculement (14) pour le ressort Belleville (2) ;
l'anneau de fil (1) présentant deux sens d'enroulement, et **caractérisé en ce que** le rayon (15) de la ligne de basculement (14) peut être ajusté au moyen du sens d'enroulement, une arête de l'anneau de fil (1) étant orientée parallèlement à l'axe central (7) de l'anneau de fil (1).

2. Système de ressort Belleville (11) selon la revendication 1, dans lequel les coins (8, 9, 10) de l'anneau de fil (1) sont arrondis.

3. Système de ressort Belleville (11) selon la revendication 1 ou 2, dans lequel l'élément de palier conjugué respectif (13) présente une rainure profilée (16) pour un anneau de fil (1) dans laquelle l'anneau de fil (1) ne peut être inséré que dans un sens d'enroulement.

4. Embrayage à friction (3) pour la connexion amovible d'un arbre de sortie (17) à une chaîne cinématique (18), présentant au moins les composants suivants :
- un paquet de friction (19) avec au moins une plaque de pressage (12) et au moins un disque de friction correspondant (20), par le biais duquel un couple peut être transmis dans l'état pressé ;
- un dispositif d'embrayage (21) qui est prévu pour presser la plaque de pressage (12) contre le disque de friction (20) ou pour la détacher du disque de friction (20) ; et
- un système de ressort Belleville (11) selon l'une quelconque des revendications 1 à 3 dans lequel le ressort Belleville (2) peut être actionné par le dispositif d'embrayage (21) et agit contre la plaque de pressage (12).

5. Véhicule automobile (22) présentant une unité d'entraînement (23) avec un arbre de sortie (17), une chaîne cinématique (18) et un embrayage à friction (3) selon la revendication 4.
